# EUROPÄISCHE PATENTSCHRIFT

(11) **EP 3 015 248 B1**
(45) Veröffentlichungstag und Bekanntmachung des Hinweises auf die Patenterteilung: **11.12.2019**
(21) Anmeldenummer: 15191985.9
(22) Anmeldetag: 28.10.2015
(51) Int. Cl.: B29C 49/78, B29C 49/42, B29C 49/06, B29C 49/36, B29C 49/18, B29K 105/00, B29L 31/00

(54) **VERFAHREN UND VORRICHTUNG ZUM UMFORMEN VON KUNSTSTOFFVORFORMLINGEN MIT QUERSCHNITTSVERÄNDERUNG EINES VOLUMENSTROMS**
METHOD AND DEVICE FOR REFORMING PLASTIC PRE-FORMS WITH CROSS-SECTIONAL CHANGE OF A VOLUME FLOW
PROCEDE ET DISPOSITIF DE TRANSFORMATIONS D'EBAUCHES EN PLASTIQUE AVEC MODIFICATION DE COUPE TRANSVERSALE D'UN DEBIT VOLUMETRIQUE

(30) Priorität: 28.10.2014 DE 102014115645
(43) Veröffentlichungstag der Anmeldung: 04.05.2016
(73) Patentinhaber: Krones AG, 93073 Neutraubling (DE)
(72) Erfinder: Dachs, Alexander, 93073 Neutraubling (DE)
(74) Vertreter: Bittner, Bernhard

(56) Entgegenhaltungen:
- EP-A2- 0 838 596
- WO-A1-2011/154326
- DE-A1- 10 240 252
- DE-A1- 19 843 053
- DE-A1-102006 061 301

## Beschreibung

Die vorliegende Erfindung bezieht sich auf ein Verfahren und eine Vorrichtung zum Umformen von Kunststoffvorformlingen zu Kunststoffbehältnissen. Derartige Verfahren und Vorrichtungen sind aus dem Stand der Technik seit langem bekannt. Dabei werden üblicherweise erwärmte Kunststoffvorformlinge durch Beaufschlagung mit Druckluft zu Kunststoffbehältnissen umgeformt. Im Stand der Technik werden dabei üblicherweise mehrere Druckstufen eingesetzt, um die Kunststoffvorformlinge zu expandieren. So ist bekannt, dass zunächst mit einem geringeren Druck ein Vorblasen vorgenommen wird und anschließend mit einem erhöhten Druck ein Fertigblasen der Kunststoffvorformlinge. Daneben wird im Stand der Technik üblicherweise ein Zwischenblasen eingesetzt, welches zeitlich zwischen dem Vorblasen und dem Fertigblasen liegt. Durch diese Vielzahl von unterschiedlichen Druckstufen entsteht eine vergleichsweise hohe Komplexität an Reservoirs, die üblicherweise als Ringkanäle ausgeführt sind. Auch ist der eigentliche Verfahrensablauf zum Umformen der Kunststoffvorformlinge relativ kompliziert. Andererseits war man bisher davon ausgegangen, dass insbesondere auch das Vorsehen des Zwischenblasdruckniveaus den Blasformprozess stark vereinfacht bzw. verbessert. Derartige Verfahren und Vorrichtungen sind in den Druckschriften DE102006061301A1, DE19843053A1, WO2011/154326A1 und EP0838596A2 beschrieben.

Der vorliegenden Erfindung liegt daher die Aufgabe zugrunde, eine Möglichkeit zu schaffen, welche einerseits die hohe Komplexität der unterschiedlichen Druckreservoirs reduziert und andererseits dennoch zu zufriedenstellenden Blasformergebnissen führt. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Bei einem erfindungsgemäßen Verfahren zum Umformen von Kunststoffvorformlingen zu Kunststoffbehältnissen und insbesondere Kunststoffflaschen werden die Kunststoffvorformlinge mittels einer Transporteinrichtung in einer Vielzahl von an dieser Transporteinrichtung angeordneten Umformungsstationen entlang eines vorgegebenen Transportpfades transportiert und wenigstens zeitweise während dieses Transports zu ihrer Expansion mit einem fließfähigen Medium beaufschlagt. Weiterhin werden die Kunststoffvorformlinge in einem ersten Verfahrensschritt mit dem unter einem ersten Druck stehenden, fließfähigen Medium beaufschlagt und in einem auf diesem ersten Verfahrensschritt zeitlich nachfolgenden weiteren Verfahrensschritt mit dem unter einem zweiten Druck p2 stehenden fließfähigen Medium beaufschlagt, wobei der zweite Druck p2 höher ist als der erste Druck p1.

Erfindungsgemäß wird wenigstens zeitweise während der Beaufschlagung der Kunststoffvorformlinge mit dem ersten Druck ein Volumenstrom des in das Behältnis gelangenden fließfähigen Mediums verändert und insbesondere erhöht.

Es wird daher bevorzugt vorgeschlagen, dass kein Zwischenblasen mehr erfolgt, sondern lediglich ein (insbesondere zeitlich verlängertes) Vorblasen bzw. ein Beaufschlagen mit dem geringeren Druck P1. Allerdings wird bevorzugt im Laufe des Expansionsprozesses der Strömungsquerschnitt verändert und insbesondere erhöht. So ist es beispielsweise möglich, dass während oder nach dem Vorblasen ein automatisches Programm abläuft, in dem ein Querschnitt eines Ventils geöffnet, insbesondere voll geöffnet wird und damit der anstehende Druck im Wesentlichen vollständig in den Kunststoffvorformling bzw. das Behältnis eingebracht wird. Neben dem Begriff Behältnis wird im Folgenden auch synonym der Begriff Behälter verwendet.

Bevorzugt wird der Kunststoffvorformling lediglich mit zwei unterschiedlichen Druckniveaus beaufschlagt. Damit wird besonders bevorzugt auf das Vorsehen eines weiteren Druckniveaus für das Zwischenblasen verzichtet. Bevorzugt folgt damit auf die Beaufschlagung mit dem ersten Druck unmittelbar die Beaufschlagung mit dem zweiten Druck ohne weitere dazwischenliegende Druckniveaus.

Bevorzugt werden die Kunststoffvorformlinge entlang eines im Wesentlichen kreisförmigen Transportpfades transportiert. Dabei ist es möglich, dass die Transporteinrichtung ein drehendes Rad wie beispielsweise ein Blasrad aufweist, an dem die Umformungsstationen angeordnet sind und mit dem die Umformungsstationen bewegt werden. Bevorzugt handelt es sich bei dem ersten Druck um einen konstanten Druck, d.h. der Druck wird während der ersten Phase des Umformungsprozesses, also dem Vorblasen, konstant gehalten. Vorteilhaft handelt es sich auch bei dem zweiten Druck um einen konstanten Druck, d.h. auch dieser Druck wird bevorzugt während der zweiten Phase des Prozesses, also dem Fertigblasen, konstant gehalten.

Bei einem weiteren bevorzugten Verfahren werden die Kunststoffvorformlinge während des Umformungsvorgangs in ihrer Längsrichtung gestreckt. Vorteilhaft wird zu diesem Zweck ein stangenartiger Körper wie insbesondere, aber nicht ausschließlich eine Reckstange in die Kunststoffvorformlinge eingeführt, um diese zu strecken.

Bei einer weiteren vorteilhaften Ausführungsform werden der erste und/oder zweite Druck durch Druckreservoirs zur Verfügung gestellt. Vorteilhaft kann es sich bei diesen Druckreservoirs um Ringkanäle handeln, welche in der Lage sind, mehrere und bevorzugt alle Umformungsstationen der Vorrichtung mit dem unter Druck stehenden Medium zu versorgen. Vorteilhaft wird die Druckzufuhr in die Behältnisse durch die Verwendung von Ventilen gesteuert. So können beispielsweise Ventile sowohl die Steuerung des Vorblasdruckes als auch die Steuerung des Fertigblasdruckes bewirken.

Bevorzugt liegt der zweite Druck zwischen 10 bar und 50 bar, bevorzugt zwischen 15 bar und 40 bar und besonders bevorzugt zwischen 20 bar und 30 bar. Bevorzugt liegt der erste Druck zwischen 5 bar und 40 bar, bevorzugt zwischen zehn bar und 30 bar und besonders bevorzugt zwischen 15 bar und 25 bar. Bei einem weiteren bevorzugten Verfahren stehen der erste und der zweite Druck in einem Verhältnis zueinander, welches zwischen 1 : 3 und 2 : 3, bevorzugt zwischen 2 : 5 und 3 : 5 liegt. Besonders bevorzugt beträgt der erste Druck etwa die Hälfte des zweiten Drucks. Vorteilhaft handelt es sich bei dem fließfähigen Medium, mit dem die Kunststoff-Vorformlinge beaufschlagt werden, um ein gasförmiges Medium und insbesondere um Blasluft.

Von besonderem Vorteil ist die Verwendung eines an sich aus der Hydraulik bekannten Proportionalventils, da dieses schnell schaltet und auch für einen hohen Durchfluss ausgelegt werden kann.

Bei einem vorteilhaften Verfahren können verschiedene Überwachungsfunktionen vorgesehen sein. So kann der Verlauf des Massenstroms bei Qualitätsabweichungen am Behälter gegebenenfalls korrigiert werden. So ist es möglich, den hergestellten Behälter "in-line", also nach der Herstellung aber noch in der Maschine / Anlage zu überprüfen, so z.B. die Wanddicke, die Bodenmasse oder die Bodengeometrie des Behälters, um dann direkt eine Anpassung des Massenstromes und/oder Volumenstroms vorzunehmen.

Es ist weiterhin möglich, den Massenstrom und/oder Volumenstrom zu messen und zur Regelung desselben einzusetzen.

Bei Verwendung eines Proportionalventils kann dieses gleichzeitig zum Entlüften des Behälters nach dem Ende des Blasvorgangs eingesetzt werden, so dass hier zusätzliche Vorkehrungen nicht mehr notwendig sind.

In Verbindung mit einem weiteren Ventil kann das Proportionalventil bevorzugt auf einfache Weise auch zum Recyceln der Blasluft verwendet werden.

Das Proportionalventil kann auf verschiedene Arten ausgestaltet sein, wie z.B. mit einem Ventilschieber oder einem Ventilkegel. Weiterhin kann eine bauliche Variation so aussehen, dass der Schieber bzw. der Kegel die Positionen durch feste Anschläge einnimmt, er kann aber auch lagegeregelt sein. Eine Lageregelung ist zwar komplizierter, aber genauer.

In der gesamten Beschreibung ist immer die Rede von der Steuerung bzw. Regelung des Volumenstroms bzw. Massenstromes des Fluids. Da der Massenstrom über die Dichte des Fluids direkt mit dem Volumenstrom zusammenhängt, ist das beschriebene Verfahren ggfs. anstatt als volumenstromgesteuert auch als massenstromgesteuert durchzuführen.

Bei einer weiteren vorteilhaften Ausführungsform werden die Kunststoffvorformlinge während eines ersten Zeitraums mit dem ersten Druck beaufschlagt und während eines zweiten Zeitraums mit dem zweiten Druck, wobei diese Zeiträume in einem Verhältnis zueinander stehen, welches zwischen 1:2 und 1:20 liegt. Bevorzugt wird daher der Zeitraum, über den hinweg die Kunststoffvorformlinge mit dem Druck p1 beaufschlagt werden gegenüber Verfahren aus dem Stand der Technik erhöht.

Bei einem weiteren vorteilhaften Verfahren wird der erste Druck durch ein erstes Druckreservoir zur Verfügung gestellt und wenigstens zeitweise fließfähiges Medium ausgehend von wenigstens einer Umformungsstation diesem ersten Druckreservoir zur Verfügung gestellt. Es wird also hier vorgeschlagen, dass ein Teil der zum Blasen verwendeten Druckluft wieder recycelt wird. Da wie oben erwähnt der Fertigblasdruck erheblich höher liegt als der Vorblasdruck, ist es nach erfolgter Umformung der Kunststoffvorformlinge möglich, einen Teil dieses Druckes wieder aus dem Behältnis zurück in das Druckreservoir für den Vorblasdruck zu führen.

Bei einem weiteren vorteilhaften Verfahren erfolgt eine Steuerung der Zuführung des fließfähigen Mediums in die Kunststoffvorformlinge bzw. zu den Kunststoffvorformlingen in Abhängigkeit von einer Umfangsposition der jeweiligen Umformungsstationen. Daher wird hier insbesondere eine drehwinkelabhängige Steuerung des Blasprozesses vorgeschlagen.

Wie oben erwähnt wird damit bevorzugt eine Steuerung des Strömungsquerschnitts mittels eines elektrischen Ventils vorgeschlagen, d.h. insbesondere eines Ventils, welches eine elektrische Verstellung des Strömungsquerschnitts erlaubt. Dabei ist der Volumenstrom über einen Querschnitt bzw. Öffnungsquerschnitt des Ventils einstellbar. So kann nach dem Vorblasen ein automatisches Programm ablaufen, in dem der Strömungsquerschnitt voll geöffnet wird. Dabei ist es möglich, dass eine Öffnung dieses Strömungsquerschnitts kontinuierlich erfolgen kann, es wären jedoch auch Öffnungen mit einem gestuften Verlauf denkbar. Nach der Öffnung des Ventils wird bevorzugt eine Umschaltung auf das zweite Druckniveau p2 durchgeführt, wobei es sich hierbei bevorzugt um eine Schwellwertumschaltung handelt. Diese kann beispielsweise bei einem Druckniveau von einem bar unter dem p1-Druck erfolgen.

Der Luftverbrauch wird dann theoretisch etwas höher, weil nur noch in einen Kanal recycelt wird. Jedoch wird dieser Unterschied sehr gering, je niedriger der höhere Druck p2 wird, weil auch in den aus dem Stand der Technik bekannten Systemen der Vorblasdruck p1 und der Zwischenblasdruck Pi annähernd das gleiche Druckniveau aufweisen. Die Anmelderin konnte ermitteln, dass im Ergebnis dennoch eine Verbesserung zu erwarten ist.

Durch jüngere Entwicklungen im Bereich der Entlüftung wird jedoch der p2-Druck mittelfristig im Bereich von 20 bis 30 Bar, bevorzugt bei etwa 25 Bar liegen, was dazu führt, dass der Pi-Druck des Zwischenblasens bei etwa 12 bar liegt, d.h. im Bereich des p1-Druckniveaus. Durch die vorgeschlagene Vorgehensweise wird das Recyceln von Druckluft einfacher und schneller, da der Querschnitt des Ventils vollständig geöffnet ist. Daneben können auch feste Grenzen für die Steuerung und die Druckniveaus angegeben werden. Bisher ist es unbekannt, wie viel Luft aus dem Druckreservoir für den Druck p1 stammt und wie viel Luft aus dem Druckreservoir für den Druck Pi stammt. Entsprechend verschieben sich auch die jeweiligen Prozesswinkel.

Weiterhin entfällt einmal die Schaltzeitverzögerung. Ein kompletter Ringkanal einschließlich Ventil sowie auch eine Vielzahl von Parametern in einem Bediengerät wie etwa einem Touchscreen können entfallen. Dadurch dass auf das Zwischendruckniveau vollständig verzichtet wird, wird auch das Luftrecycling deutlich vereinfacht. Eine fehlerhafte Einstellung des Pi-Systems und des Recyclings können so vermieden werden.

Die vorliegende Erfindung ist weiterhin auf eine Vorrichtung zum Umformen von Kunststoffvorformlingen zu Kunststoffflaschen bzw. Kunststoffbehältnissen gerichtet. Diese Vorrichtung weist eine bewegliche Transporteinrichtung mit einer Vielzahl von Umformungsstationen auf, welche an dieser Transporteinrichtung angeordnet sind und von dieser transportiert werden. Dabei weist jede dieser Umformungsstationen jeweils wenigstens eine Beaufschlagungseinrichtung zum Beaufschlagen der Kunststoffvorformlinge mit einem fließfähigen Medium auf. Weiterhin weist die Vorrichtung ein erstes Druckluftreservoir auf, welches das fließfähige Medium mit einem ersten Druck zur Verfügung stellt sowie ein zweites Druckluftreservoir, welches die Druckluft mit einem zweiten Druck zur Verfügung stellt, wobei der zweite Druck höher ist als der erste Druck und wobei die Vorrichtung weiterhin eine Steuerungseinrichtung aufweist, welche die Zuführung des fließfähigen Mediums in die Kunststoffvorformlinge steuert.

Erfindungsgemäß weist die Vorrichtung eine Strömungsquerschnittsveränderungseinrichtung auf, welche eine Veränderung eines Strömungsquerschnitts des in die Behältnisse gelangenden fließfähigen Mediums wenigstens zeitweise erlaubt. Weiterhin ist die Steuerungseinrichtung derart gestaltet, dass wenigstens zeitweise während der Beaufschlagung der Kunststoffvorformlinge mit dem ersten Druck ein Volumenstrom des in das Behältnis gelangenden fließfähigen Mediums verändert und insbesondere erhöht wird. Es wird daher auch vorrichtungsseitig vorgeschlagen, dass mittels einer Strömungsquerschnittsveränderungseinrichtung ein Strömungsquerschnitt verändert wird.

Vorteilhaft handelt es sich bei der Strömungsquerschnittsveränderungseinrichtung um ein Proportionalventil, um die Zufuhr des fließfähigen Mediums unter dem ersten Druck zu steuern.

Bei einer weiteren vorteilhaften Ausführungsform weist die Vorrichtung wenigstens eine Verbindungsleitung auf, mittels derer das fließfähige Medium von wenigstens einer Umformungsstation in das erste Reservoir geführt werden kann. Damit wird hier ebenfalls wieder eine Leitungsverbindung vorgeschlagen, welche ein Recyceln von Blasluft ermöglicht. Vorteilhaft ist in einer Verbindungleitung zwischen der besagten Umformungsstation und wenigstens einem Druckluftreservoir eine Querschnittsveränderungseinrichtung angeordnet, welche eine Veränderung des Volumenstroms oder Massenstroms des von der Umformungsstation zu diesem Reservoir gelangenden fließfähigen Mediums erlaubt.

Bei einer weiteren vorteilhaften Ausführungsform weist die Vorrichtung wenigstens eine Messeinrichtung zur Bestimmung eines Volumenstroms des fließfähigen Mediums auf. So ist es möglich, dass auch in Abhängigkeit von dieser Messeinrichtung ausgegebenen Daten der Strömungsquerschnitt des in die Kunststoffvorformlinge gelangenden fließfähigen Mediums gesteuert wird.

Bevorzugt werden die beiden Druckluftreservoirs von einer Drucklufterzeugungseinrichtung wie etwa einem Kompressor gespeist. Bei einer weiteren vorteilhaften Ausführungsform sind die Druckluftreservoirs als Ringkanäle ausgebildet, welche sämtliche Umformungsstationen mit Druckluft versorgen.
- Fig. 1: ein erstes Ausführungsbeispiel einer zur Durchführung des erfindungsgemäßen Verfahrens geeigneten Vorrichtung in schematischer Teildarstellung beim Belüften eines Behälters,
- Fig. 2: die Vorrichtung nach Fig. 1 beim Entlüften eines Behälters,
- Fig. 3: ein zweites Ausführungsbeispiel einer zum Durchführen des erfindungsgemäßen Verfahrens geeigneten Vorrichtung in schematischer Teildarstellung beim Belüften eines Behälters,
- Fig. 4: die Vorrichtung nach Fig. 3 in einer die Blasluft recycelnden Stellung,
- Fig. 5: ein Diagramm der Ventilsteuerung und des vorbestimmten Verlaufs des Massenstroms über der Zeit,
- Fig. 6: eine Draufsicht auf eine Anlage zum Herstellen von Behältern, insbesondere Kunststoffflaschen,
- Fig. 7: eine Darstellung eines Druckverlaufs während eines Expansionsvorgangs, und
- Fig. 8: eine weitere Darstellung einer erfindungsgemäßen Vorrichtung.

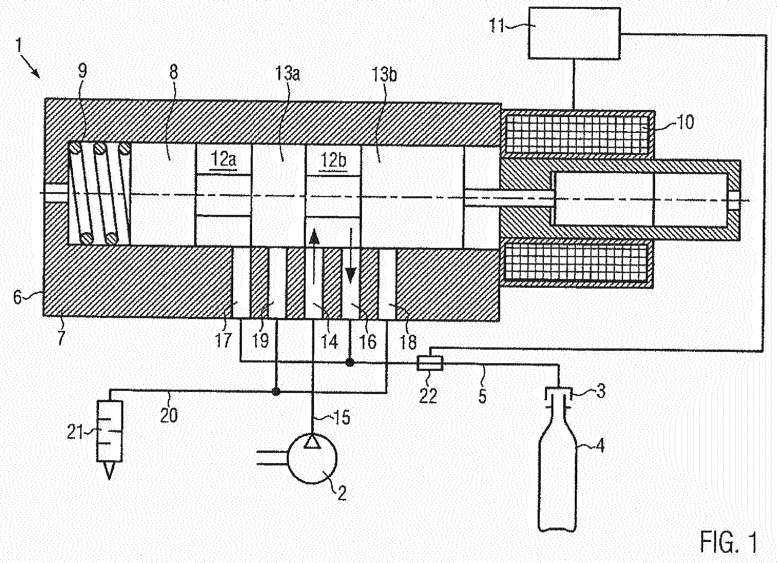

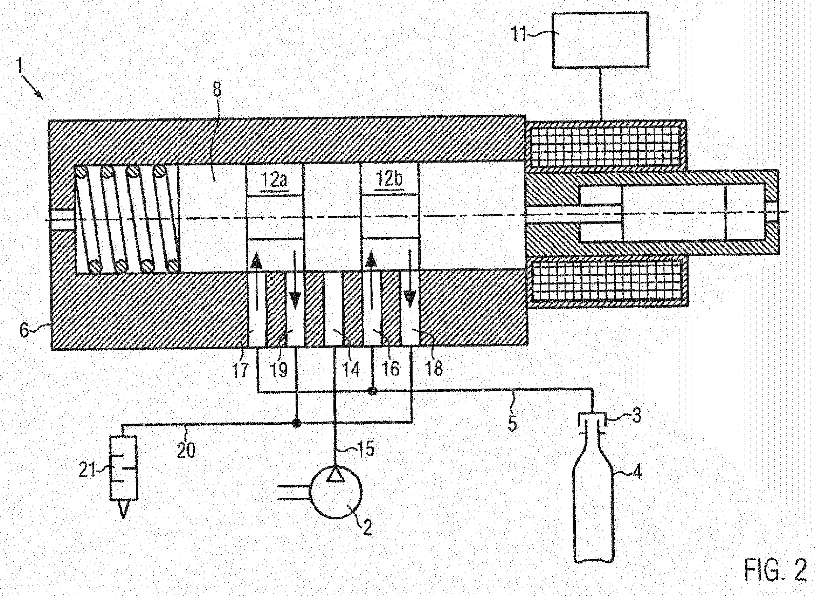

Aus den Fig. 1 und 2 ist ein erstes Ausführungsbeispiel einer Vorrichtung 1 zum Durchführen eines Blasverfahrens ersichtlich. Die Vorrichtung 1 ist äußerst schematisiert und beschränkt auf die zur Erläuterung der Erfindung notwendigen Bauteile. Die Vorrichtung 1 kann Teil jeder bekannten Behälterherstellungsmaschine, insbesondere Blasformmaschine, insbesondere Streckblasmaschine sein.

Die Vorrichtung 1 enthält eine Druckluftquelle 2, die bevorzugt als ein- oder mehrstufiger Kompressor ausgebildet oder mit diesem verbunden ist. Die Druckluftquelle 2 sollte in der Lage sein, Druckluft von 0 bis zu 40, bevorzugt bis zu 50 bar bereitzustellen.

Daneben weist die Vorrichtung zwei Druckluftreservoirs auf (nicht in Fig. 1 gezeigt) auf, welche von einer oder mehreren Druckluftquellen gespeist werden können. Dabei dienen diese beiden Druckluftreservoirs zur Vorhaltung von Blasluft unter zwei unterschiedlichen Drücken p1 und p2. Anders als in der Figur 1 gezeigt können von der Druckluftquelle 2 oder mehreren Druckluftquellen diese Druckluftreservoirs gespeist werden. Dabei wäre es möglich, dass die in Fig. 1 gezeigte Anordnung für mehrere Druckluftreservoirs vorhanden ist. Auch weist bevorzugt die Beaufschlagungseinrichtung 3 einen Ventilblock auf, der die Zuführung der Blasluft unter unterschiedlichen Drücken in das Behältnis steuert.

Die Vorrichtung 1 enthält weiterhin eine der üblichen Blasformen, die hier nicht dargestellt ist. In die Blasformen wird ein Vorformling oder ein Preform aus Kunststoff, insbesondere PET, herkömmlicher Art eingesetzt und als Behälter 4 wieder entnommen. Die Blasform steht über eine Blasluftleitung 5 mit der Druckluftquelle 2 in Verbindung. In die Blasluftleitung 5 ist eine Einrichtung 6 zum Verändern eines Massenstroms der in die Blasform eingeleiteten Druckluft eingeschaltet. Als Einrichtung 6 kann jedes Element verwendet werden, das in der Lage ist, mit der für eine korrekte Durchführung des Blasvorgangs notwendigen Geschwindigkeit zu schalten, und das einen Durchflussquerschnitt einer Blasluftleitung über einen ausreichend großen Bereich verändern kann, um die unterschiedlichen Massenströme der Blasluft, die zum Erreichen einer bestimmten Form des Behälters 4 notwendig sind, bereitstellen zu können. Die Einrichtung 6 ist bevorzugt als Proportionalventil ausgebildet, wobei ein übliches Proportionalventil aus der Hydraulik verwendet und an den Einsatzzweck zum Verändern eines Massenstroms von Druckluft angepasst wird. Insbesondere kann das Proportionalventil 6 so verändert werden, dass der Einfluss von Positionierungsungenauigkeiten auf den durchfließenden Massenstrom minimiert wird, der Durchfluss somit wesentlich weniger sensibel auf eine Positionierungenauigkeit reagiert.

Das in der Vorrichtung 1 verwendete Proportionalventil ist hier als 3/2-Wegeventil ausgebildet und enthält ein Gehäuse 7, in dem ein Ventilkolben 8 gegen die Kraft einer Feder 9 axial verschiebbar ist. Der Ventilkolben 8 wird durch einen Elektromagneten 10 von einer Steuerung 11 gesteuert. Der Ventilkolben 8 ist in Axialrichtung aufeinander folgend in unterschiedliche Bereiche geteilt, wobei in der dargestellten Ausgestaltung zwei Umlenkbereiche 12a und 12b und zwei Schließbereiche 13a und 13b einander abwechseln.

Das Gehäuse 7 wird von Ein- und/oder Auslassöffnungen durchsetzt, wobei eine Einlassöffnung 14 über eine Druckluftleitung 15 mit der Druckluftquelle 2 verbunden ist. Es sind weiterhin zwei Öffnungen 16, 17 vorgesehen, die über die Blasluftleitung 5 mit der Blasform verbunden sind. Schließlich sind zwei Öffnungen 18 und 19 vorgesehen, die über eine Entlüftungsleitung 20 mit der Umgebung verbunden sind, bevorzugt über einen Schalldämpfer 21. Vor Beginn des Blasvorgangs wird ein Verlauf eines Massenstroms der Blasluft in Abhängigkeit vom vorbestimmten Ablauf des Blasvorganges vorgegeben. Dieser vorgegebene Verlauf wird dann während des Blasens durch Veränderungen im Durchflussquerschnitt der Öffnungen 14, 16, 17, 18, 19 realisiert.

Zu diesem Zweck wird über die Steuerung 11 im dargestellten Ausführungsbeispiel der Ventilkolben 8 des Proportionalventils 6 so verschoben, dass der zweite Umlenkraum 12b die Druckluft-Einlassöffnung 14 mit der Öffnung 16 zur Blasform verbindet. Die zur Entlüftungsleitung 20 führenden Öffnungen 18 und 19 sind durch die Stellbereiche 13a, 13b verschlossen, und die Öffnung 17 ist in den ersten Umlenkraum 12a offen und dient dem Druckausgleich.

Dann wird der Ventilkolben 8 entsprechend eines vorbestimmten Verlaufs M des Massenstroms verschoben, der in der Steuerung 11 abgespeichert ist, wodurch der Durchflussquerschnitt der Öffnung 16 in der vorgegebenen Weise vergrößert und verkleinert wird.

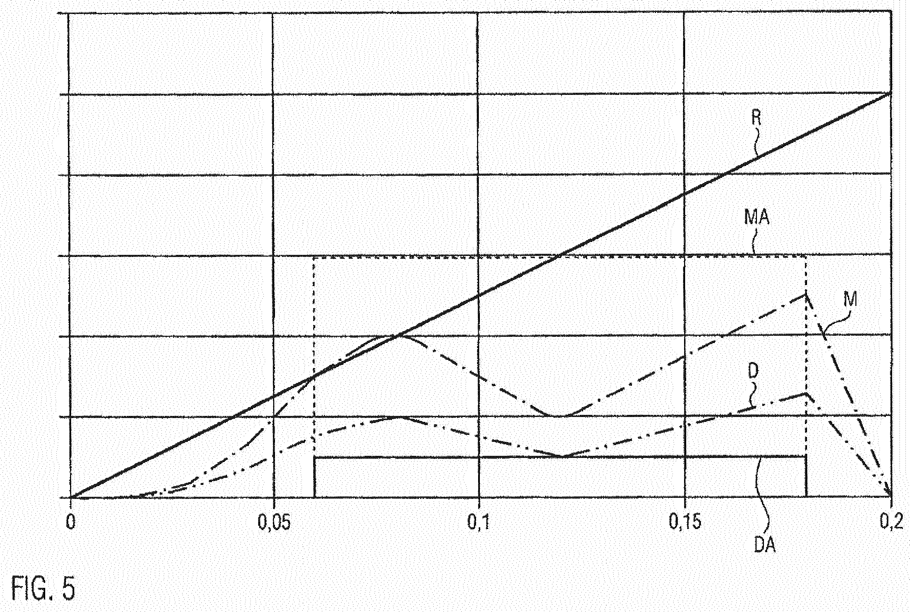

Fig. 5 zeigt ein Diagramm mit verschiedenen Kurven, wobei auf der x-Achse die Zeit in Sekunden und auf der y-Achse die Ventilstellung, der Massenstrom sowie der Reckweg aufgetragen sind. Diese Figur bezeichnet eine aus dem Stand der Technik bekannte Vorgehensweise.

In Fig. 5 ist ein Beispiel eines bevorzugten, zeitlichen Verlaufs M des Massenstroms M aufgetragen (strichpunktierte Kurve). Weiterhin aus Fig. 5 ist ersichtlich, dass der Kurvenverlauf der Öffnungsstellungen des Durchflussquerschnittes entlang der Kurve D (Strichlinierte Kurve) dem vorbestimmten zeitlichen Verlauf des Massenstroms M entspricht. Dabei ist zunächst ein Vorblasvorgang zu erkennen, in dem der Durchflussquerschnitt bis auf einen ersten Maximalwert ansteigt, durch den ein erster Maximalwert des Massenstroms in den Preform gelangt. Dadurch wird zunächst ein erstes Aufblähen des Preforms erreicht, bis sich ein Druckausgleich zwischen der Blasluft im Inneren des Preforms / der Blase und der Materialantwort des zu reckenden Kunststoffes ergibt. Da der Druck mit zunehmendem Fließen des Materials abnimmt, würde hier bei einer herkömmlichen Druckregelung eine Stellantwort erfolgen und der Druck nachgeregelt werden.

Zum Fertigblasen wird der Massenstrom gemäß der Kurve M auf einen zweiten Maximalwert gebracht, der höher ist als der Maximalwert beim Vorblasen. Demgemäß wird auch der Durchflussquerschnitt stärker geöffnet, als dies für das Vorblasen erforderlich ist.

Zwischen dem Vorblasen und dem Fertigblasen wird der Massenstrom verringert und dementsprechend der Durchflussquerschnitt verkleinert. Durch diese Maßnahme kann die Verteilung des Materials im Bereich zwischen dem Boden und der Einlassöffnung des Behälters 4 beeinflusst werden. Dabei wird insbesondere die Verteilung des Materials zwischen der Mitte des Behälters und dem Boden vergleichmäßigt.

Zum Vergleich ist in Fig. 5 eine Massenstromkurve MA (punktierte Linie) und die zugeordnete Ventilstellung DA (dünne durchgezogene Linie) aufgetragen, die sich ergeben würde, wenn der Massenstrom der Blasluft nicht erfindungsgemäß nach einem vorgegebenen Verlauf, sondern allein durch das An- und Abschalten der Druckluftzufuhr verändert würde. Diese Kurven MA, Da beschreiben also einen weiteren der bisher bekannten Vorgänge beim Blasen von Behältern 4.

In Fig. 5 ist weiterhin der prozentuale Reckweg von 0 bis 100 %, d.h. vom Preform bis zum fertigen Behälter, als gerade Linie R aufgetragen. Fig. 5 zeigt somit, dass durch ein einfaches An- und Abschalten der Druckluftzufuhr, bei einer zweckmäßigen Anpassung des Drucks der Druckluft, der Behälter bis auf 100 % gereckt wird, auf den Verlauf des Massenstroms zwischen 0 und 100 % Reckung jedoch keinerlei Einfluss genommen werden kann.

Wie Fig. 1 zeigt, kann in der Blasluftleitung 5 zur Blasform oder an einer anderen geeigneten Stelle eine Einrichtung 22 zum Überprüfen des Massenstroms der Druckluft angeordnet werden. Diese Einrichtung 22, beispielsweise einer der üblichen Durchflussmesser, ist mit der Steuerung 11 verbunden und kann gegebenenfalls regelnd eingreifen, wenn der tatsächliche Massenstrom vom vorgegebenen Massenstrom abweicht. Weiterhin können nicht gezeichnete Qualitätsprüfeinrichtungen, beispielsweise Messeinrichtungen der Wanddicke, ebenfalls mit der Steuerung 11 verbunden werden und beispielsweise entweder den vorgegebenen Verlauf M des Massenstroms für alle nachfolgenden Blasvorgänge verändern oder andere Veränderungen durchführen. Weiterhin kann der Blasdruck wie üblich überwacht und die festgestellten Druckwerte z. B. zur Dokumentation in einer Blaskurve verarbeitet werden. Der Verlauf M des Massenstroms der Blasluft, nach dem der Durchflussquerschnitt verändert wird, kann jedoch außer als zeitlicher Verlauf, wie in Fig. 5 dargestellt, auch als Verlauf in Abhängigkeit von bestimmten Verfahrensparametern oder bestimmten Verfahrenszuständen vorgegeben werden. So kann der Verlauf des Massenstroms der Blasluft auch in Abhängigkeit von einer bestimmten Stelle eines Blasrades einer herkömmlichen Blasformmaschine vorgegeben werden, so dass jeder Stellung des Blasrades ein bestimmter Durchflussquerschnitt der Blasluftzufuhr zugeordnet ist.

Bei Verwendung des in Fig. 1 gezeichneten Proportionalventils als Einrichtung zum Verändern des Durchflussquerschnittes, kann der Behälter 4 nach dem Fertigblasen auf einfache Weise entlüftet werden. Die Entlüftungsstellung ist in Fig. 2 gezeigt. Der Ventilkolben 8 ist in eine Stellung verschoben, in der die Einlassöffnung 14 der Druckluftleitung 15 von der Druckluftquelle 2 verschlossen ist, beide Öffnungen 16, 17 mit der Blasluftleitung 5 zur Blasform und die beiden anderen Öffnungen 18, 19 mit der Entlüftungsleitung 20 verbunden sind. Jeweils eine der Öffnungen 16, 17 zur Blasform ist zusammen mit jeweils einer Öffnung 18 bzw. 19 zur Entlüftungsleitung 20 mit dem gleichen Umlenkraum 12a bzw. 12b verbunden. Ist das Ventil 6 vollständig geöffnet, so steht somit der doppelte Durchflussquerschnitt, verglichen mit dem Blasvorgang gemäß Fig. 1, zum Entlüften des fertigen Behälters 4 zur Verfügung, so dass die Entlüftung sehr rasch vonstatten gehen kann, was zu einer Verkürzung des Blaszyklus führt.

Im Rahmen einer vorteilhaften Ausführungsform wird vorgeschlagen, dass zum Zwecke des Recycelns Blasluft ausgehend von dem bereites expandierten Behältnis wieder zurück in wenigstens ein Druckreservoir geführt wird, insbesondere in dasjenige Reservoir, welches die geringere Druckstufe d.h. den Druck p1 bereitstellt. Diese Rückführung erfolgt dabei bevorzugt wieder über das Strömungsquerschnittsveränderungselement, insbesondere das Proportionalventil. Bevorzugt ist wenigstens zeitweise und besonders vollständig während dieser Rückführung der Blasluft in das Reservoir dessen Volumenstrom maximal bzw. der Strömungsquerschnitt des Strömungsquerschnittsveränderungselements maximal.

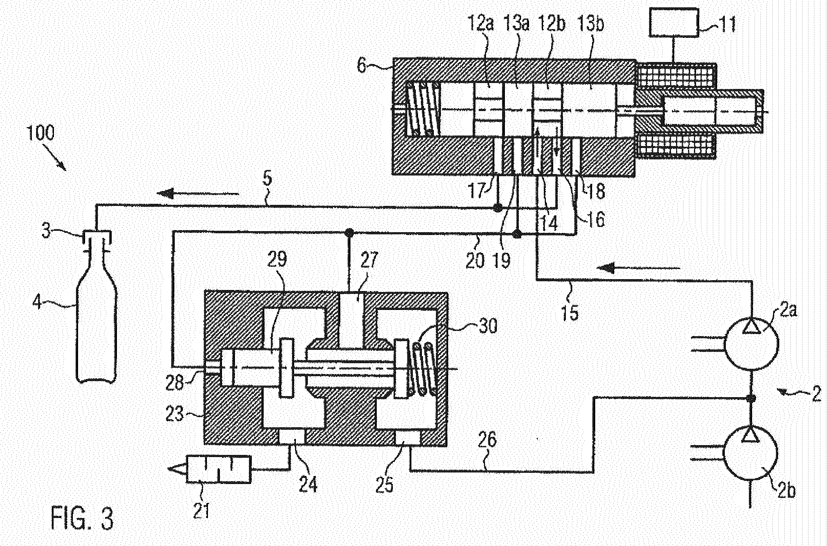

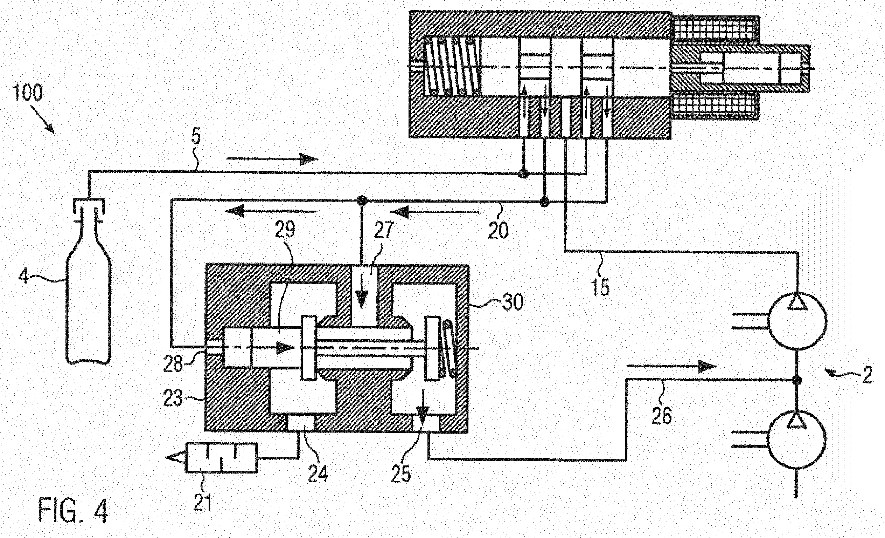

Die Fig. 3 und 4 zeigen ein weiteres Ausführungsbeispiel einer Vorrichtung 100 zur Durchführung eines Blasformverfahrens, wobei gleiche bzw. vergleichbare Bauteile mit den gleichen Bezugszeichen gekennzeichnet und nicht nochmals erläutert sind. Auch die Vorrichtung 100 verwendet ein Proportionalventil 6 als Einrichtung zum Verändern des Massenstroms der Blasluft, wobei das Proportionalventil 6 der Vorrichtung 100 in Konstruktion und Steuerung dem Proportionalventil der Vorrichtung 1 entspricht.

Fig. 3 zeigt den Blasvorgang. Die Vorrichtung 100 enthält eine Druckluftquelle 2, die hier zwei Kompressoren bzw. zwei Kompressorstufen eines Kompressors 2a und 2b umfasst.

In die Entlüftungsleitung 20 ist ein zusätzliches Entlüftungsventil 23 eingeschaltet (diese Situation ist in Fig. 4 gezeigt). Das Entlüftungsventil 23 enthält zwei Ausgangsöffnungen 24 und 25. Die Ausgangsöffnung 24 führt über den Schalldämpfer 21 in die Umgebungsluft. Die Öffnung 25 führt über eine Recyclingleitung 26 in die Druckluftquelle 2, bevorzugt zwischen die beiden Kompressorstufen 2a, 2b. Das Entlüftungsventil 23 weist weiterhin zwei Einlassöffnungen 27 und 28 auf, die beide mit der Entlüftungsleitung 20 verbunden sind. Das Entlüftungsventil 23 enthält einen axial verschiebbaren Ventilkolben 29, der die Einlassöffnung 27 wahlweise mit einer der beiden Auslassöffnungen 24, 25 verbindet. Der Ventilkolben 29 wird von einer Stirnseite durch die Entlüftungsleitung 20 beaufschlagt und stützt sich auf der anderen Stirnseite auf einer Feder 30 ab. Die Feder 30 bestimmt den Schaltdruck, bei dessen Überschreitung sich der Ventilkolben 29 bewegt. Der Schaltdruck liegt bevorzugt bei 20 bar. Wenn somit der Druck in der Entlüftungsleitung 20 den Federdruck 30 übersteigt, d.h. die Entlüftungsleitung 20 ausreichend Druck führt, damit sich ein Recyceln der Druckluft lohnt, so wird der Ventilkolben 29 in eine Stellung verschoben, in der die Entlüftungsleitung 20 mit der Recyclingleitung 26 verbunden wird, so dass die den Behälter 4 entweichende Blasluft wieder der Druckluftquelle 2 zugeführt wird.

Fällt der Druck in der Entlüftungsleitung 20 unter den Federdruck der Feder 30 ab, so wird die Einlassöffnung 27, über den Schalldämpfer 21, mit der Umgebung verbunden und die restliche Blasluft abgeblasen.

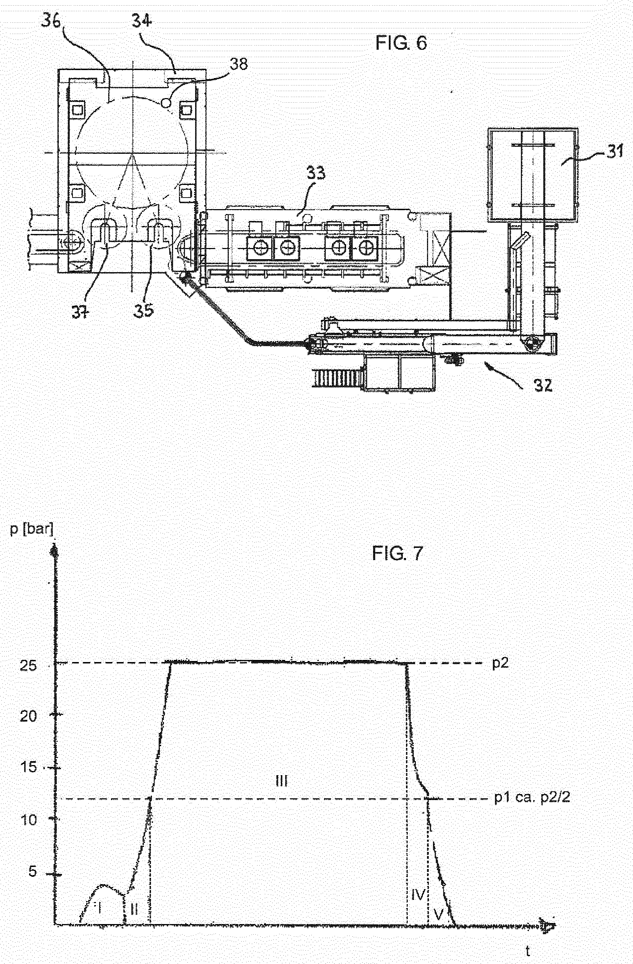

Fig. 6 zeigt eine Anlage zum Herstellen von Behältern 4, wobei die Vorformlinge in einem Speicher 31 gespeichert und in einer Vereinzelungsvorrichtung 32 vereinzelt, ausgerichtet und einem Heizofen 33 zur Erwärmung zugeführt werden. In dem Heizofen 33 wird jedem Vorformling ein Temperaturprofil aufgeprägt, das eine definierte Verformung in jede Richtung erlaubt. Nach dem Heizofen 33 werden sie über den Einlaufstern 35 dem Blasrad 36 zugeführt, an dem äquidistant hier nicht gezeigte Blasstationen angebracht sind. Die Blasstationen weisen je mindestens eine Einrichtung 6 zur gesteuerten Zufuhr von Blasluft sowie in der Regel auch eine die Vorformlinge bezüglich ihrer Längsachse streckende Reckstange auf. Das Bezugszeichen 34 kennzeichnet die Umformungsvorrichtung in ihrer Gesamtheit

Das Blasrad 36 stellt damit die oben erwähnte Transporteinrichtung zum Transport der Kunststoffvorformlinge bzw. der Kunststoffbehältnisse dar. Das Bezugszeichen 38 kennzeichnet schematisch eine an dem Blasrad angeordnete Umformungsstation. Damit werden die Umformungsstationen 38 hier entlang eines im Wesentlichen kreisförmigen Pfades geführt.

Vorzugsweise ist jede Blasstation dazu ausgebildet, das erfindungsgemäße Verfahren durchzuführen. Alternativ können die Blasstationen auch mehrere Einrichtungen 6 aufweisen, die die Luftverteilung / Luftsteuerung während der Herstellung der Behälter übernehmen. So kann z.B. eine zweite Einrichtung 6 pro Blasstation zur Steuerung der Luftrückgewinnung aus der Flasche vorhanden sein. Die fertigen Behälter 4 werden vom Blasrad 36 mittels eines Auslaufsterns 37 an die folgenden Maschinen weitergegeben.

In Abwandlung der beschriebenen und gezeichneten Ausführungsbeispiele kann anstelle des Proportionalventils 6 jede andere geeignete Einrichtung zum Verändern des Durchflussquerschnittes für die Blasluft eingesetzt werden. Werden mit dem erfindungsgemäßen Verfahren Lebensmittelbehälter, wie beispielsweise Getränkeflaschen oder dgl. hergestellt, so sollten ölfreie und auch in anderer Hinsicht lebensmittelrechtlich unbedenklich arbeitende Ventile oder dgl. eingesetzt werden.

Fig. 7 zeigt eine Darstellung eines Druckverlaufs für ein erfindungsgemäßes Verfahren. Dabei ist auf der x-Achse die Zeit aufgetragen und auf der y-Achse der Druck. Die gestrichelten horizontalen Linien kennzeichnen die beiden Druckniveaus p1 und p2. Dabei ist bei der in Fig. 7 gezeigten Situation der Druck p1 etwa halb so groß wie der Druck p2

In dem ersten Verfahrensschritt I erfolgt ein Vorblasen des Kunststoffvorformlings. In diesem Verfahrensschritt kann durch eine Einstellung des Querschnitts des p1 Ventils (bei dem es sich insbesondere um ein Proportionalventil der oben beschriebenen Art handeln kann) und insbesondere anstatt einer Änderung des p1 - Druckes eine Materialverteilung des zu expandierenden Kunststoffvorformlings optimiert werden. Wie erwähnt liegt dieser Druck p1 etwa bei der Hälfte des Drucks p2.

In dem Verfahrensschritt II erfolgt nun ein verlängertes Vorblasen anstatt des im Stand der Technik üblicherweise durchgeführten Zwischenblasens. In diesem Verfahrensabschnitt wird der Strömungsquerschnitt des Proportionalventils voll geöffnet, um den Prozesswinkel zu optimieren.

In dem Verfahrensschritt III erfolgt ein Fertigblasen des Behältnisses unter dem höheren Druck p2. Dabei wird das Ventil, welches die Blasluft unter dem Druck p1 zuführt, geschlossen.

In dem Verfahrensschritt IV erfolgt ein Recyceln der Blasluft. Dabei wird nach dem Ausformen des Behältnisses Blasluft zurück in das Reservoir mit dem Druck p1 geführt. Diese Zuführung erfolgt dabei vorteilhaft auch über die Strömungsquerschnittsveränderungseinrichtung d.h. insbesondere das Proportionalventil. Bevorzugt wird wenigstens zeitweise und bevorzugt stets während dieses Verfahrensschritts IV der maximale Strömungsquerschnitt bzw. der maximale Volumenstrom zugelassen, um so die Recycling - Dauer zu minimieren. In dem Verfahrensschritt V erfolgt ein Entlasten des Behältnisses.

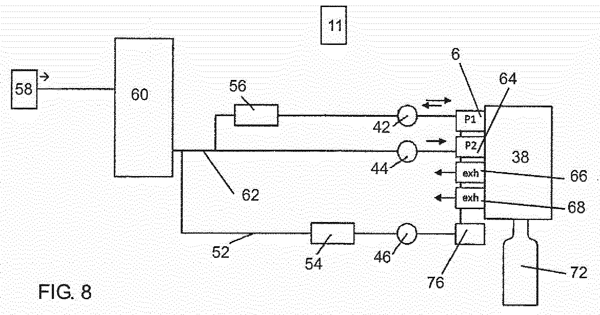

Fig. 8 zeigt eine schematische Darstellung einer erfindungsgemäßen Vorrichtung. Dabei ist eine Bereitstellungseinheit 58 zum Bereitstellen von Druckluft bzw. Prozessluft vorgesehen. Diese Bereitstellungseinheit 58, bei der es sich beispielsweise um einen Kompressor handeln kann, ist vorteilhaft stationär angeordnet. Das Bezugszeichen 60 bezieht sich auf eine Verteileinrichtung, welche die Prozessluft auf die einzelnen Umformungsstationen aufteilt. Diese Verteileinrichtung ist bevorzugt als sog. Drehverteiler ausgeführt.

Diese so auf die Umformungsstationen 38 verteilte Druckluft wird einerseits einer Steuerluftleitung 52 und andererseits einer Prozessluftleitung 62 zugeführt. Ausgehend von dieser Prozessluftleitung 62 wird die Druckluft wiederum hier auf ein erstes Druckluftreservoir 42 und ein zweites Druckluftreservoir 44 aufgeteilt. Bei diesen Druckluftreservoirs handelt es sich bevorzugt um Ringkanäle, die auf dem drehenden Teil der Vorrichtung angeordnet sind.

Das Bezugszeichen 6 bezieht sich hier wieder auf eine erste Ventileinrichtung, welche hier als Proportionalventil ausgebildet ist und welche die Zufuhr der Druckluft mit dem Druckniveau p1 an das Kunststoffbehältnis 72 steuert. Das Bezugszeichen 64 kennzeichnet eine zweite Ventileinrichtung, welche die Druckluftzufuhr von Druckluft mit dem zweiten Druck p2 an das Behältnis steuert. Das Bezugszeichen 56 kennzeichnet eine Druckregeleinrichtung, welche den Druck p1 regelt.

Die Luft in der Steuerleitung wird über eine Druckregeleinrichtung 54 einem weiteren Druckluftreservoir 46, welches ebenfalls als Ringkanal ausgeführt ist, zugeführt. Die Bezugszeichen 66 und 68 beziehen sich auf Auslass bzw. Exhaust-Ventile. Das Bezugszeichen 11 kennzeichnet eine (nur grob schematisch gezeigte) Steuerungseinrichtung, welche die Zufuhr der Druckluft in die Kunststoffbehältnisse steuert. Daneben können noch eine oder mehrere Messeinrichtungen zum Messen eines Volumen- bzw. Massenstroms vorgesehen sein. Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können. So kann beispielsweise das in Fig. 1 beschriebene Proportionalventil für die in Fig. 8 gezeigte Vorrichtung verwendet werden.

## Patentansprüche

1. Verfahren zum Umformen von Kunststoffvorformlingen zu Kunststoffflaschen (4), wobei die Kunststoffvorformlinge mittels einer Transporteinrichtung (36) in einer Vielzahl von an dieser Transporteinrichtung (36) angeordneten Umformungsstationen (38) entlang eines vorgegebenen Transportpfads transportiert werden und wenigstens zeitweise während dieses Transport zu ihrer Expansion mit einem fließfähigen Medium beaufschlagt werden, wobei die Kunststoffvorformlinge in einem ersten Verfahrensschritt (I) mit dem unter einem ersten Druck (p1) stehenden fließfähigen Medium beaufschlagt werden und in einem auf diesen ersten Verfahrensschritt zeitlich nachfolgenden weiteren Verfahrensschritt mit dem unter einem zweiten Druck (p2) stehenden fließfähigen Medium beaufschlagt werden, wobei der zweite Druck (p2) höher ist als der erste Druck (p1),
**dadurch gekennzeichnet, dass**
wenigstens zeitweise während der Beaufschlagung der Kunststoffvorformlinge mit dem ersten Druck (p1) ein Volumenstrom des in das Behältnis gelangenden fließfähigen Mediums verändert und insbesondere erhöht wird, wobei der Volumenstrom mittels eines Proportionalventils verändert wird, wobei es sich bei dem ersten Druck um einen konstanten Druck handelt, das heißt der erste Druck wird während der ersten Phase des Umformungsprozesses, also einem Vorblasen, konstant gehalten.

2. Verfahren nach Anspruch 1,
**dadurch gekennzeichnet, dass**
der erste Druck (p1) und der zweite Druck (p2) in einem Verhältnis zueinanderstehen, welches zwischen 1:3 und 2:3 liegt.

3. Verfahren nach wenigstens einem der vorangegangenen Ansprüche,
**dadurch gekennzeichnet, dass**
die Kunststoffvorformlinge während eines ersten Zeitraums (t1) mit dem ersten Druck (p1) beaufschlagt werden und während eines zweiten Zeitraums (t2) mit dem zweiten Druck (p2) und diese Zeiträume in einem Verhältnis zueinander stehen welches zwischen 1:2 und 1:20 liegt.

4. Verfahren nach wenigstens einem der vorangegangenen Ansprüche,
**dadurch gekennzeichnet, dass**
der erste Druck (p1) durch ein erstes Druckreservoir zur Verfügung gestellt wird und wenigstens zeitweise fließfähiges Medium ausgehend von wenigstens einer Umformungsstation (38) diesem ersten Druckreservoir zugeführt wird.

5. Verfahren nach wenigstens einem der vorangegangenen Ansprüche,
**dadurch gekennzeichnet, dass**
eine Steuerung der Zuführung des fließfähigen Mediums zu den Kunststoffvorformlingen in Abhängigkeit von einer Umfangsposition der Umformungsstationen (38) erfolgt.

6. Vorrichtung (1) zum Umformen von Kunststoffvorformlingen zu Kunststoffflaschen (4) mit einer beweglichen Transporteinrichtung (36), mit einer Vielzahl von Umformungsstationen (38), welche an dieser Transporteinrichtung (36) angeordnet und von dieser transportiert werden, wobei jede Umformungsstation jeweils wenigstens eine Beaufschlagungseinrichtung (3) zum Beaufschlagen der Kunststoffvorformlinge mit einem fließförmigen Medium aufweist, und mit einem ersten Druckluftreservoir, welches das fließfähige Medium mit einem ersten Druck (p1) zur Verfügung stellt sowie einem zweiten Druckluftreservoir, welches die Druckluft mit einem zweiten Druck (p2) zur Verfügung stellt, wobei der zweite Druck (p2) höher ist als der erste Druck (p1), wobei die Vorrichtung weiterhin eine Steuerungseinrichtung (11) aufweist, welche die Zuführung des fließfähigen Mediums in die Kunststoffvorformlinge steuert,
**dadurch gekennzeichnet, dass**
die Steuerungseinrichtung (11) derart gestaltet ist, dass wenigstens zeitweise während der Beaufschlagung der Kunststoffvorformlinge mit dem ersten Druck ein Volumenstrom des in die Kunststoffvorformlinge gelangenden fließfähigen Mediums verändert und insbesondere erhöht wird, wobei die Vorrichtung ein Proportionalventil (6) aufweist, um die Zuführung des fließfähigen Mediums unter dem ersten Druck (p1) zu steuern, und wobei es sich bei dem ersten Druck um einen konstanten Druck handelt, das heißt der erste Druck ist während der ersten Phase des Umformungsprozesses, also einem Vorblasen, konstant haltbar.

7. Vorrichtung (1) nach Anspruch 6,
**dadurch gekennzeichnet, dass**
die Vorrichtung (1) eine Verbindungsleitung (5) aufweist, mittels derer das fließfähige Medium von wenigstens einer Umformungsstation (38) in das erste Druckreservoir geführt werden kann.

8. Vorrichtung (1) nach wenigstens einem der vorangegangenen Ansprüche 6 - 7, **dadurch gekennzeichnet, dass**
die Vorrichtung (1) eine Messeinrichtung (22) zur Bestimmung eines Volumenstroms des fließfähigen Mediums aufweist.

## Claims

1. Method for forming plastic preforms into plastic bottles (4), wherein the plastic preforms are transported along a predefined transport path by means of a transport device (36) in a plurality of forming stations (38) arranged on this transport device (36), and at least at times during this transport, bombarded with a fluid medium for their expansion, wherein the plastic preforms in a first method step (I) are bombarded with the fluid medium at a first pressure (p1) and in a further method step, temporally following the first method step, bombarded with the fluid medium at a second pressure (p2), wherein the second pressure (p2) is higher than the first pressure (p1),
**characterized in that**
at least at times during bombardment of the plastic preforms at the first pressure (p1), a volume flow of the fluid medium entering the container is changed and in particular increased, wherein the volume flow is changed by means of a proportional valve, wherein the first pressure is a constant pressure, that means the first pressure is held constant during the first phase of the shaping process, that is to say during a pre-blowing.

2. Method according to claim 1,
**characterized in that**
the first pressure (p1) and the second pressure (p2) have a ratio to each other of between 1:3 and 2:3.

3. Method according to at least one of the preceding claims,
**characterized in that**
the plastic preforms are bombarded at a first pressure (p1) during a first time period (t1) and at a second pressure (p2) during a second time period (t2), and these time periods have a ratio to each other of between 1:2 and 1:20.

4. Method according to at least one of the preceding claims,
**characterized in that**
the first pressure (p1) is provided by a first pressure reservoir and at least at times, fluid medium is supplied to this first pressure reservoir from at least one forming station (38).

5. Method according to at least one of the preceding claims,
**characterized in that**
the supply of fluid medium to the plastic preforms is controlled depending on a peripheral position of the forming stations (38).

6. Device (1) for forming plastic preforms into plastic bottles (4) with a movable transport device (36), with a plurality of forming stations (38) which are arranged on this transport device (36) and transported thereby, wherein each forming station has at least one bombardment device (3) for bombarding the plastic preforms with a fluid medium, and with a first compressed air reservoir which provides the fluid medium at a first pressure (p1), and with a second compressed air reservoir which provides the compressed air at a second pressure (p2), wherein the second pressure (p2) is higher than the first pressure (p1), wherein the device furthermore has a control device (11) which controls the supply of the fluid medium into the plastic preforms,
**characterized in that**
the control device (11) is configured such that at least at times during the bombardment of the plastic preforms at the first pressure, a volume flow of the fluid medium entering the plastic preforms is changed and in particular increased, wherein the device has a proportional valve (6) to control the supply of the fluid medium at the first pressure (p1), and wherein the first pressure is a constant pressure, that means the first pressure is able to be held constant during the first phase of the shaping process, that is to say during a pre-blowing.

7. Device (1) according to claim 6,
**characterized in that**
the device (1) has a connecting line (5), by means of which the fluid medium can be conducted from at least one forming station (38) into the first pressure reservoir.

8. Device (1) according to at least one of the preceding claims 6 - 7,
**characterized in that**
the device (1) comprises a measurement device (22) for determining a volume flow of the fluid medium.

## Revendications

1. Procédé pour transformer des ébauches en matière plastique en bouteilles en matière plastique (4), dans lequel les ébauches en matière plastique sont transportées au moyen d'un moyen de transport (36) dans une pluralité de stations de façonnage (38) agencées sur ce moyen de transport (36) le long d'un chemin de transport prédéfini et sont exposées au moins par intermittence pendant ce transport à un milieu coulant afin de s'élargir, dans lequel les ébauches en matière plastique sont exposées au cours d'une première étape de procédé (I) au milieu coulant se trouvant à une première pression (p1) et, au cours d'une autre étape de procédé succédant à cette première étape de procédé, sont exposées au milieu coulant se trouvant à une seconde pression (p2), dans lequel la seconde pression (p2) est supérieure à la première pression (p1),
**caractérisé en ce que**
un débit volumique du milieu coulant parvenant dans le contenant est modifié, et en particulier augmenté, au moins par intermittence pendant que les ébauches en matière plastique sont exposées à la première pression (p1), dans lequel le débit volumique est modifié au moyen d'une soupape proportionnelle, la première pression étant une pression constante, c'est-à-dire que la première pression est maintenue constante pendant la première phase du processus de façonnage, donc un présoufflage.

2. Procédé selon la revendication 1,
**caractérisé en ce que**
la première pression (p1) et la seconde pression (p2) sont dans un rapport compris entre 1:3 et 2:3.

3. Procédé selon au moins l'une des revendications précédentes,
**caractérisé en ce que**
les ébauches en matière plastique sont exposées à la première pression (p1) pendant un premier laps de temps (t1) et à la seconde pression (p2) pendant un second laps de temps (t2) et ces laps de temps sont dans un rapport compris entre 1:2 et 1:20.

4. Procédé selon au moins l'une des revendications précédentes,
**caractérisé en ce que**
la première pression (p1) est fournie par un premier réservoir de pression et le milieu coulant est amené au moins par intermittence d'au moins une station de façonnage (38) à ce premier réservoir de pression.

5. Procédé selon au moins l'une des revendications précédentes,
**caractérisé en ce que**
une commande de l'amenée du milieu coulant aux ébauches en matière plastique s'effectue en fonction d'une position circonférentielle des stations de façonnage (38).

6. Dispositif (1) pour transformer des ébauches en matière plastique en bouteilles en matière plastique (4), pourvu d'un moyen de transport (36) mobile, d'une pluralité de stations de façonnage (38), lesquelles sont agencées sur ledit moyen de transport (36) et transportées par celui-ci, dans lequel chaque station de façonnage présente respectivement au moins un moyen d'exposition (3) permettant que les ébauches en matière plastique soient exposées à un milieu coulant, et d'un premier réservoir d'air comprimé, lequel fournit le milieu coulant avec une première pression (p1) ainsi que d'un second réservoir d'air comprimé, lequel fournit l'air comprimé avec une seconde pression (p2), dans lequel la seconde pression (p2) est supérieure à la première pression (p1), dans lequel le dispositif présente en outre un moyen de commande (11), lequel commande l'amenée du milieu coulant dans les ébauches en matière plastique,
**caractérisé en ce que**
le moyen de commande (11) est configuré de telle sorte qu'un débit volumique du milieu coulant parvenant dans les ébauches en matière plastique est modifié, et en particulier augmenté, au moins par intermittence pendant que les ébauches en matière plastique sont exposées à la première pression, dans lequel le dispositif présente une soupape proportionnelle (6), afin de commander l'amenée du milieu coulant se trouvant à la première pression (p1), la première pression étant une pression constante, c'est-à-dire que la première pression est maintenue constante pendant la première phase du processus de façonnage, donc un présoufflage.

7. Dispositif (1) selon la revendication 6,
**caractérisé en ce que**
le dispositif (1) présente une conduite de liaison (5) au moyen de laquelle le milieu coulant peut être guidé d'au moins une station de façonnage (38) dans le premier réservoir d'air comprimé.

8. Dispositif (1) selon au moins l'une des revendications précédentes 6 à 7,
**caractérisé en ce que**
le dispositif (1) présente un dispositif de mesure (22) destiné à déterminer un débit volumique du milieu coulant.
